# EUROPÄISCHE PATENTSCHRIFT

(11) **EP 1 717 544 B1**
(45) Veröffentlichungstag und Bekanntmachung des Hinweises auf die Patenterteilung: **05.03.2008**
(21) Anmeldenummer: 06005695.9
(22) Anmeldetag: 21.03.2006
(51) Int. Cl.: G01B 5/00, B25B 11/00

(54) **Stützelement zum Halten eines Werkstücks**
Support element for holding a workpiece
Elément d'appui pour fixer une pièce à usiner

(30) Priorität: 25.04.2005 DE 202005006662 U
(43) Veröffentlichungstag der Anmeldung: 02.11.2006
(73) Patentinhaber: Junker & Partner GmbH, 66636 Tholey (DE)
(72) Erfinder: Huber, Alfred, 66571 Eppelborn (DE); Junker, Franz-Rudolf, 66636 Sotzweiler (DE)
(74) Vertreter: Bernhardt, Reinold

(56) Entgegenhaltungen:
- EP-A- 1 050 738
- EP-A- 1 314 516
- DE-A1- 19 707 781

## Beschreibung

Die Erfindung betrifft ein Stützelement zum Halten eines Werkstücks, insbesondere eines Bauteils einer Fahrzeugkarosserie, in einer Referenzposition, mit einem Basisteil und einem mit dem Basisteil verbundenen, zur Anlage gegen das Werkstück vorgesehenen Aufnahmeteil, wobei die Position des Aufnahmeteils relativ zum Basisteil zur Verstellung auf einer an dem Basisteil gebildeten Gleitfläche verschiebbar und das Aufnahmeteil in einer gewünschten Position an der Gleitfläche verklemmbar ist.

Ein solches Stützelement lässt sich in einer Vorrichtung zum Halten von Werkstücken, insbesondere Fahrzeugkarosserieteilen, verwenden, wie sie in der europäischen Patentanmeldung EP 1 050 738 A2 beschrieben ist. Auf einer Basisplattform dieser Vorrichtung sind mehrere solche, Stützstellen für das Werkstück bildende Stützelemente angeordnet, wobei wenigstens ein Teil der Stützelemente verstellbare und verklemmbare Aufnahmeteile aufweist.

Aus der Patentanmeldung EP 1 314 516 A1 geht ein Halteelement hervor, bei dem ein Aufnahmeteil und ein Basisteil einander zugewandete Gleitflächen aufweisen. Zur Verstellung des Halteteils ist innerhalb der Gleitebene sowohl in der Gleitfläche des Halteteils als auch in der Gleitfläche des Basisteils eine Führungsnut gebildet. Eine Verschiebung der Teile gegeneinander in der Ebene wird dadurch ermöglicht, dass sich die Längsachsen beider Führungsnuten, in der Draufsicht auf die Gleitebene gesehen, kreuzen.

Der Erfindung liegt die Aufgabe zugrunde, ein neues Stützelement der eingangs erwähnten Art zu schaffen, das eine schnelle und genaue Verstellung der Stützstellenposition zulässt.

Das diese Aufgabe lösende Stützelement nach der Erfindung ist dadurch gekennzeichnet, dass die Gleitfläche an einem relativ zum übrigen Basisteil mit einer Komponente senkrecht zur Gleitfläche bewegbaren Teilstück des Basisteils gebildet und der Aufnahmeteil zur Arretierung durch das Teilstück gegen einen am Basisteil gebildeten Gegenhalter pressbar ist.

Durch eine solche Verklemmung des Aufnahmeteils kann bei großer Genauigkeit der Stützstellenposition eine schnelle Arretierung erreicht werden.

In einer besonders bevorzugten Ausführungsform weist das bewegbare Teilstück des Basisteils ein Gewinde auf und ist zwecks Bewegung senkrecht zu der Gleitfläche in einem Gegengewinde drehbar. Durch Drehung schiebt sich die Gleitfläche senkrecht gegen das Aufnahmeteil vor und klemmt es zwischen der Gleitfläche und dem Gegenhalter ein.

Vorzugsweise ist der Aufnahmeteil auf der Gleitfläche und damit die Stützstellenposition in zwei Koordinatenrichtungen verschiebbar.

In einer besonders bevorzugten Ausführungsform der Erfindung ist am Basisteil ein Anschlag für ein zwischen dem Aufnahmeteil und dem Basisteil anzuordnendes Endmaß gebildet. Mit Hilfe eines solchen Endmaßes kann ein bestimmtes Verschiebungsmaß eingestellt werden, so dass die neue Stützstellenposition genau bekannt ist.

Zweckmäßig ist das bewegbare Teilstück als Scheibe mit einem das Gewinde aufweisenden Ansatz ausgebildet. Bei dem Ansatz handelt es sich z. B. um einen Zapfen mit einem Außengewinde.

In weiterer Ausgestaltung der Erfindung weist der Aufnahmeteil ein mit einem Ende gegen das Werkstück anlegbaren Dorn auf, welcher am anderen Ende mit einer gegen die Gleitfläche anlegbaren, vorzugsweise eine Scheibe umfassenden, Aufweitung versehen ist, wobei sich die Aufweitung zur Arretierung des Aufnahmeteils gegen den Gegenhalter pressen lässt.

Durch den Basisteil kann ein das Teilstück und die Aufweitung aufnehmendes Gehäuse mit einer Öffnung, durch welche der Dorn hindurchragt gebildet sein. Die Aufweitung ist dann gegen die die Öffnung aufweisende Wand des Gehäuses pressbar, wobei die Wand den Gegenhalter bildet.

Das Gehäuse kann wenigstens eine weitere Öffnung für die Einführung von Endma-ßen aufweisen.

In weiterer Ausgestaltung der Erfindung lässt sich das Teilstück mit Hilfe eines durch eine Langlochöffnung hindurch aus dem Gehäuse herausragenden Hebel drehen, d. h. durch Bewegung dieses Hebels ist der Aufnahmeteil aus der Arretierung lösbar. Durch Bewegung des Hebels in entgegengesetzter Richtung erfolgt wieder eine Arretierung.

Im arretierten Zustand aneinander anliegende Teile des Gegenhalters und der Aufweitung sind zweckmäßig gehärtet dadurch vor schneller Abnutzung geschützt.

Die genannte Öffnung kann eine konische Randfläche aufweisen und der Dorn in der Öffnung durch einen Ring mit einer konischen Gegenfläche zentrierbar sein, um den Aufnahmeteil in einer Bezugsposition anzuordnen.

Die Erfindung wird nachfolgend anhand eines Ausführungsbeispiels und der beiliegenden, sich auf dieses Ausführungsbeispiel beziehenden Zeichnungen näher erfäutert. Es zeigen:
- Fig. 1: ein Stützelement nach der Erfindung in einer geschnittenen Seitenansicht,
- Fig. 2: das Stützelement von Fig. 1 um einer gegenüber Fig. 1 um 90 ° gedrehten Seitenansicht, und
- Fig. 3: Draufsichten auf das Stützelement von Fig. 1 oder 2 mit verschiedenen Positionen eines Aufnahmeteils.

Ein Stützelement zur Abstützung eines Werkstücks 1 in einer Referenzposition, insbesondere zum Halten eines Karosseriebauteils, weist ein Basisteil 2 und ein mit dem Basisteil 2 verbundenes Aufnahmeteil 3 zur Anlage gegen das Werkstück 1 auf. Das Basisteil 2 ist über ein Zwischenstück 4 mit einem höhenverstellbaren Element verbunden, das seinerseits auf eine von einer Trägerplattform vertikal vorstehende Stütze montiert ist (Element, Stütze und Basisplattform nicht gezeigt).

Das Basisteil 2 umfasst ein durch vier Schrauben 21 und zusätzlich Passstifte 33 zusammengehaltenes Gehäuse 5 mit einer Grundplatte 6 und einer Deckelplatte 7. Zur passgenauen Verbindung des Gehäuses 5 mit dem Zwischenstück 4 dient ein Passstift 22.

Das Aufnahmeteil 3 weist einen Dorn 8 auf, dessen dem Basisteil abgewandtes Ende in eine Öffnung im Werkstück 1 einführbar ist. Am anderen Ende ist am Dorn 8 eine Platte 9 angebracht, welche eine Aufweitung bildet und mit ihrer dem Dorn 9 abgewandten Seite gegen eine weitere, mit dem Basisteil 2 verbundene Platte 10 anliegt, welche eine Gleitfläche 31 für die Platte 9 bildet.

Die Platte 10 weist einen zentralen, mit einem Außengewinde versehenen Zapfenansatz 11 auf. Das Außengewinde des Zapfensansatzes 11 steht im Eingriff mit einem Innengewinde in einem mit der Grundplatte 6 verschraubten, in die Grundplatte 6 eingelassenen Buchseneinsatz 12.

Ein bei 13 mit der Platte 10 verbundener Hebel 14 ragt durch eine Langlochöffnung 15 hindurch aus dem Gehäuse 5 heraus.

In der Deckelplatte 7 ist eine zentrale Öffnung 16 gebildet, durch welche hindurch der Dorn 8 des Aufnahmeteils 3 aus dem Gehäuse 5 herausragt.

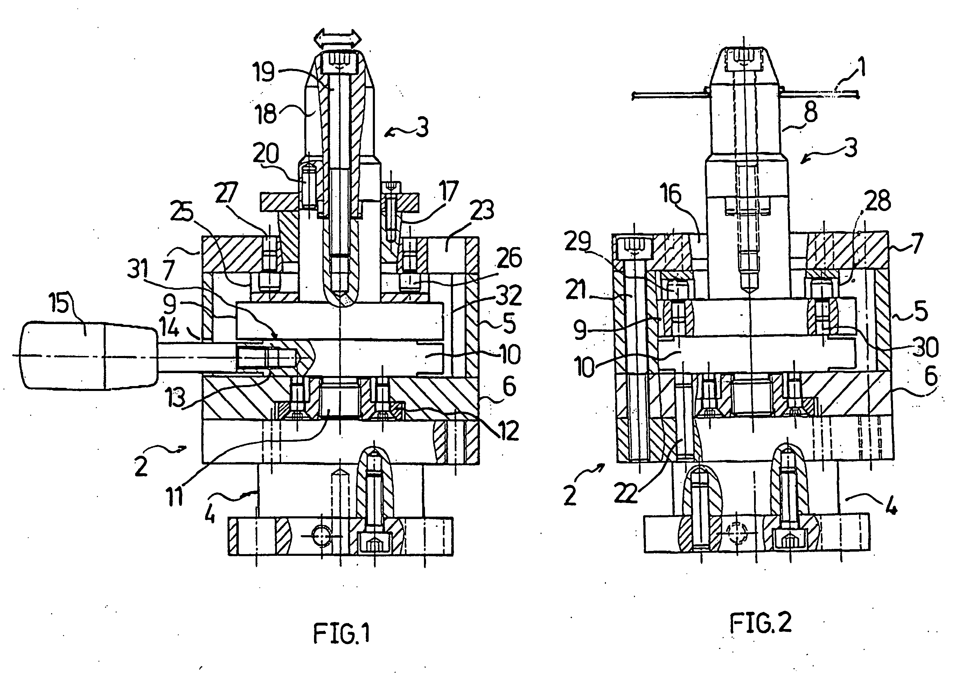

Die Öffnung 16 weist eine konische Wandfläche auf, gegen welche ein (nur in Fig. 1 gezeigter) konischer Ring 17 anliegt, durch welchen das Basisteil 2 in einer zur Öffnung 16 koaxialen Position zentrierbar ist.

Wie Fig. 1 und 2 erkennen lassen, ist der Dorn des Aufnahmeteils 3 zweiteilig ausgebildet und weist ein Endstück 18 auf, das durch eine Schraube 19 mit dem übrigen Dorn lösbar verbunden ist. Für einen genauen Sitz des Endstücks 18 auf dem übrigen Dorn 8 sorgt ein in Passbohrungen eingreifender Passstift 20.

Die Scheibe 9 ist mit zwei auf der Scheibe zueinander diametral angeordneten U-Stücken 25 verbunden, in welche jeweils ein Zapfen 26 eingreift, welcher mit einem Schaftteil in eine Bohrung 27 in der Deckelplatte 7 eingesetzt ist (Fig. 1).

Zu den Bohrungen 27 um 90° versetzt sind an der Deckelplatte 7 zwei diametral zueinander angeordnete U-Stücke 28 angebracht, in welche jeweils ein mit der Platte 9 verbundener Zapfen 29 eingreift. Der Zapfen 29 ist mit einem Schaft in eine Bohrung 30 in der Platte 9 eingesetzt (Fig. 2).

Sowohl die U-Stücke 25 und 28 als auch die Zapfen 26 und 29 sind gehärtet.

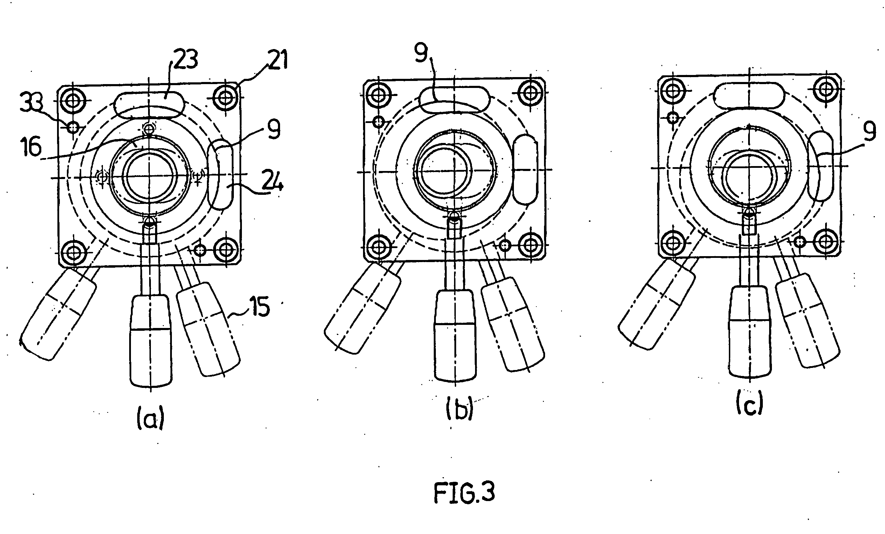

Wie insbesondere Fig. 3 erkennen lässt, weist die Deckelplatte 7 zwei Öffnungen 23 und 24 auf, durch welche hindurch Endmaße eingeführt und zwischen der Randfläche der Platte 9 und einer Wand 32 des Gehäuses 5 angeordnet werden können.

In einem arretierten Zustand des Aufnahmeteils 3 presst die Platte 10 die Platte 9 gegen die mit den Teilen 26 und 28 einen Gegenhalter bildende Deckelplatte 7, wobei die Zapfen 26 zur Anlage gegen den Basisschenkel der U-Stücke 25 an der Scheibe 9 und die Zapfen 29 gegen die Basisschenkel der U-Stücke 28 an der Deckelplatte 7 zur Anlage kommen.

Zur Veränderung der Position des Aufnahmeteils 3 relativ zum Basisteil 2 lässt sich die Arretierung lösen, indem der Hebel 15 um die Gewindeachse des Zapfenansatzes 11 verschwenkt wird. Durch Drehung der Platte 10 und damit des Zapfenansatzes 11 in dem Gewindebuchseneinsatz 12 wird die Platte 10 in Richtung der Gewindeachse verschoben und die Platte 9 dadurch freigegeben. Die Platte 9 des Aufnahmeteils 3 lässt sich nun auf der Platte 10 in zwei Koordinatenrichtungen in jede gewünschte Position verschieben, z. B. die in Fig. 3b und 3c gezeigten Positionen. Durch Endmaße, die in die Öffnungen 23 und 24 eingeführt werden, sind bestimmte Positionen einstellbar.

In der gewünschten Position wird der Hebel 15 in entgegengesetzter Richtung verschwenkt, wobei es wieder zu einer Verklemmung der Platte 9 des Aufnahmeteils 3 zwischen der Platte 10 und der Deckelplatte 7 kommt. Der Aufnahmeteil 3 ist nun in der neuen Position am Basisteil 2 arretiert.

Endstücke 18 können in unterschiedlicher Länge vorliegen, so dass auch die Höhe des Stützelements varrierbar ist. Die Schenkel der U-Stücke 25 und 28 begrenzen die Beweglichkeit der Platte 10 auf der Platte 9.

## Patentansprüche

1. Stützelement zum Halten eines Werkstücks (1), insbesondere eines Bauteils einer Fahrzeugkarosserie, in einer Referenzposition, mit einem Basisteil (2) und einem mit dem Basisteil (2) verbundenen, zur Anlage gegen das Werkstück (1) vorgesehenen Aufnahmeteil (3), wobei die Position des Aufnahmeteils (3) relativ zum Basisteil (2) zur Verstellung auf einer an dem Basisteil (2) gebildeten Gleitfläche (31) verschiebbar und das Aufnahmeteil (3) in einer gewünschten Position zur Arretierung unter Erzeugung einer Klemmkraft geger die Gleitfläche (31) pressbar ist,
**dadurch gekennzeichnet,**
**dass** die Gleitfläche (31) an einem relativ zum übrigen Basisteil (2) mit einer Komponente senkrecht zur Gleitfläche (31) bewegbaren Teilstück (10,11) des Basisteils (2) gebildet und der Aufnahmeteil (3) zur Arretierung durch das Teilstück (10) gegen einen am Basisteil (2) gebildeten Gegenhalter (7,26,28) pressbar ist.

2. Stützelement nach Anspruch 1,
**dadurch gekennzeichnet,**
**dass** das bewegbare Teilstück (10,11) des Basisteils (2) ein Gewinde aufweist und zwecks Bewegung senkrecht zur der Gleitfläche (31) in einem Gegengewinde drehbar ist.

3. Stützelement nach Anspruch 1 oder 2,
**dadurch gekennzeichnet,**
**dass** das Aufnahmeteil (3) auf der Gleitfläche (31) in zwei Koordinatenrichtungen verschiebbar ist

4. Stützelement nach einem der Ansprüche 1 bis 3,
**dadurch gekennzeichnet,**
**dass** am Basisteil (2) ein Anschlag (32) für ein zwischen dem Aufnahmeteil (3) und dem Basisteil (2) anzuordnendes Endmaß gebildet ist.

5. Stützelement nach einem der Ansprüche 1 bis 4,
**dadurch gekennzeichnet,**
**dass** das bewegbare Teilstück (10,11) als Scheibe (10) mit einem das Gewinde aufweisenden Ansatz (11) ausgebildet ist.

6. Stützelement nach einem der Ansprüche 1 bis 5,
**dadurch gekennzeichnet,**
**dass** der Aufnahmeteil (3) einen nahe oder mit einem Ende gegen das Werkstück (1) anlegbaren Dorn (8) aufweist, welcher am anderen Ende mit einer gegen die Gleitfläche (31) anlegbaren, vorzugsweise eine Scheibe (9) umfassenden, Aufweitung (9,25,29) versehen und die Aufweitung zur Arretierung des Aufnahmeteils (3) gegen den Gegenhalter (7,26,28) pressbar ist.

7. Stützelement nach Anspruch 6,
**dadurch gekennzeichnet,**
**dass** durch den Basisteil (2) ein das Teilstück (10,11) und die Aufweitung (9,25,29) umgebendes Gehäuse (5) mit einer Öffnung (16), durch welche der Dorn (8) hindurchragt gebildet ist.

8. Stützeelement nach Anspruch 7,
**dadurch gekennzeichnet,**
**dass** das Gehäuse (5) wenigstens eine weitere Öffnung (23,24) für die Einführung von Endmaßen in das Gehäuse (5) aufweist.

9. Stützelement nach Anspruch 7 oder 8,
**dadurch gekennzeichnet,**
**dass** das Teilstück (10,11) mit Hilfe eines durch eine Langlochöffnung (14) hindurch aus dem Gehäuse (5) herausragenden Hebels (15) drehbar ist.

10. Stützelement nach einem der Ansprüche 6 bis 9,
**dadurch gekennzeichnet,**
**dass** der Gegenhalter (7,26,28) und die Aufweitung (9,25,29) gehärtete, im arretierten Zustand des Aufnahmeteils (3) gegeneinander anliegende Teile (25,26,28,39) aufweisen.

11. Stützelement nach einem der Ansprüche 7 bis 10,
**dadurch gekennzeichnet,**
**dass** die Öffnung (16) eine konische Randfläche aufweist und der Dorn (8) in der Öffnung (16) durch einen Ring (17) mit einer konischen Gegenfläche zentrierbar ist.

## Claims

1. Support element for holding a workpiece (1), in particular a component of a vehicle body, in a reference position, having a base part (2) and a receiving part (3) which is connected to the base part (2) and is intended to bear against the workpiece (1), wherein the position of the receiving part (3) can be displaced relative to the base part (2) for adjustment on a sliding face (31) formed on the base part (2), and the receiving part (3) can, in a desired position, be pressed against the sliding face (31) for locking purposes, at the same time producing a clamping force,
**characterized**
**in that** the sliding face (31) is formed on a part (10, 11) of the base part (2) which can be moved relative to the remaining base part (2) together with a component perpendicularly to the sliding face (31), and the receiving part (3) can, for locking purposes, be pressed by the part (10) against a counterholder (7, 26, 28) formed on the base part (2).

2. Support element according to Claim 1,
**characterized**
**in that** the movable part (10, 11) of the base part (2) has a thread and, for the purpose of movement perpendicularly to the sliding face (31), can be rotated in a counterthread.

3. Support element according to Claim 1 or 2,
**characterized**
**in that** the receiving part (3) can be displaced on the sliding face (31) in two coordinate directions.

4. Support element according to one of Claims 1 to 3,
**characterized**
**in that** a stop (32) for a gauge block which is to be arranged between the receiving part (3) and the base part (2) is formed on the base part (2).

5. Support element according to one of Claims 1 to 4,
**characterized**
**in that** the movable part (10, 11) is in the form of a plate (10) with a projection (11) which has the thread.

6. Support element according to one of Claims 1 to 5,
**characterized**
**in that** the receiving part (3) has a mandrel (8) which can be made to bear in the proximity of the workpiece (1) or can be made to bear with one end against the workpiece (1), the said mandrel (8) being provided, at the other end, with a widened portion (9, 25, 29) which can be made to bear against the sliding face (31), preferably comprises a plate (9) and can be pressed against the counterholder (7, 26, 28) in order to lock the receiving part (3).

7. Support element according to Claim 6,
**characterized**
**in that** the base part (2) forms a housing (5) which surrounds the part (10, 11) and the widened portion (9, 25, 29) and has an opening (16) through which the mandrel (8) protrudes.

8. Support element according to Claim 7,
**characterized**
**in that** the housing (5) has at least one further opening (23, 24) for inserting gauge blocks into the housing (5).

9. Support element according to Claim 7 or 8,
**characterized**
**in that** the part (10, 11) can be rotated using a lever (15) which protrudes out of the housing (5) through an elongated hole (14).

10. Support element according to one of Claims 6 to 9,
**characterized**
**in that** the counterholder (7, 26, 28) and the expansion (9, 25, 29) have hardened parts (25, 26, 28, 39) which bear against one another in the locked state of the receiving part (3).

11. Support element according to one of Claims 7 to 10,
**characterized**
**in that** the opening (16) has a conical edge surface and the mandrel (8) can be centred in the opening (16) by a ring (17) having a conical mating face.

## Revendications

1. Élément de soutien pour maintenir une pièce à oeuvrer (1), en particulier un composant d'une carrosserie de véhicule, dans une position de référence, comprenant une partie de base (2) et une partie de réception (3) reliée à la partie de base (2) et prévue pour venir en contact contre la pièce à oeuvrer (1), la position de la partie de réception (3) par rapport à la partie de base (2) étant déplaçable pour un réglage sur une surface de coulissement (31) formée sur la partie de base (2) et la partie de réception (3) est susceptible d'être pressée en générant une force de serrage pour son blocage dans une position souhaitée contre la surface de coulissement (31),
**caractérisé en ce que** la surface de coulissement (31) est formée sur une pièce partielle (10, 11), de la partie de base (2), mobile par rapport au reste de la partie de base (2) avec une composante perpendiculaire à la surface de coulissement (31), et pour son blocage la partie de réception (3) est susceptible d'être pressée par la pièce partielle (10) contre un contre-appui (7, 26, 28) formé sur la partie de base (2).

2. Élément de soutien selon la revendication 1,
**caractérisé en ce que** la pièce partielle mobile (10, 11) de la partie de base (2) comprend un filet et, en vue de son déplacement perpendiculairement par rapport à la surface de coulissement (31), elle est susceptible de tourner dans un filet complémentaire.

3. Élément de soutien selon la revendication 1 ou 2,
**caractérisé en ce que** la partie de réception (3) est déplaçable sur la surface de coulissement (31) dans deux directions de coordonnées.

4. Élément de soutien selon l'une des revendications 1 à 3,
**caractérisé en ce qu'**une butée (32) est formée sur la partie de base (2) pour une dimension finale à définir entre la partie de réception (3) et la partie de base (2).

5. Élément de soutien selon l'une des revendications 1 à 4,
**caractérisé en ce que** la pièce partielle mobile (10, 11) est réalisée sous forme d'un disque (10) avec un talon (11) qui présente le filet.

6. Élément de soutien selon l'une des revendications 1 à 5,
**caractérisé en ce que** la partie de réception (3) comprend un mandrin (8) susceptible d'être amené à proximité ou d'être appliqué par une extrémité contre la pièce à oeuvrer (1) et qui est pourvu à l'autre extrémité d'un élargissement (9, 25, 29) destiné à être appliqué contre la surface de coulissement (31) et comprenant de préférence un disque (9), et l'élargissement est susceptible d'être pressé contre le contre-appui (7, 26, 28) pour le blocage de la partie de réception (3).

7. Élément de soutien selon la revendication 6,
**caractérisé en ce que** par la partie de base (2) est formée un boîtier (5), qui entoure la pièce partielle (10,11) et l'élargissement (9, 25, 29), et qui est pourvu d'une ouverture (16) à travers laquelle traverse le mandrin (8).

8. Élément de soutien selon la revendication 7,
**caractérisé en ce que** le boîtier (5) présente au moins une autre ouverture (23, 24) pour l'introduction de cales étalons dans le boîtier (5).

9. Élément de soutien selon la revendication 7 ou 8,
**caractérisé en ce que** la pièce partielle (10, 11) est susceptible d'être tournée à l'aide d'un levier (15) qui sort hors du boîtier (5) en traversant une ouverture oblongue (14).

10. Élément de soutien selon l'une des revendications 6 à 9,
**caractérisé en ce que** le contre-appui (7, 26, 28) et l'élargissement (9, 25, 29) comprennent des pièces durcies appliquées l'une contre l'autre (25, 26, 28, 39) dans l'état bloqué de la partie de réception (3).

11. Élément de soutien selon l'une des revendications 7 à 10,
**caractérisé en ce que** l'ouverture (16) présente une surface de bordure conique, et le mandrin (8) peut être centré dans l'ouverture (16) au moyen d'une bague (17) avec une surface antagoniste conique.
